# EUROPÄISCHE PATENTSCHRIFT

(11) **EP 2 630 397 B1**
(45) Veröffentlichungstag und Bekanntmachung des Hinweises auf die Patenterteilung: **20.12.2017**
(21) Anmeldenummer: 11770704.2
(22) Anmeldetag: 12.10.2011
(51) Int. Cl.: F16L 11/12, F16L 33/02, F16L 33/28

(54) **BATTERIEANORDNUNG MIT EINEM KÜHLFLÜSSIGKEITS-VERTEILERSCHLAUCH**
ARRANGEMENT OF BATTERIES WITH A COOLING FLUID MANIFOLD-HOSE
ARRANGEMENT DE BATTERIES AVEC TUYAU DISTRIBUTEUR FLEXIBLE POUR RÉFRIGÉRANT

(30) Priorität: 21.10.2010 DE 102010049015
(43) Veröffentlichungstag der Anmeldung: 28.08.2013
(73) Patentinhaber: Johnson Controls Hybrid and Recycling GmbH, 30419 Hannover (DE)
(72) Erfinder: JOSWIG, Ralf, 29690 Buchholz (Aller) (DE); WIEGMANN, Martin, 27746 Borstel (DE); BRENNER, Helge, 30451 Hannover (DE)
(74) Vertreter: Trinks, Ole
(86) Internationale Anmeldenummer: PCT/EP2011/005113
(87) Internationale Veröffentlichungsnummer: WO 2012/052129

(56) Entgegenhaltungen:
- EP-A1- 1 338 840
- EP-A2- 1 526 317
- DE-A1- 3 030 134
- DE-A1- 3 413 632
- DE-A1- 19 501 615
- DE-U1- 20 102 973
- FR-A2- 2 595 437

## Beschreibung

Die Erfindung betrifft ferner eine Batterieanordnung für Elektro- oder Hybridfahrzeuge.

Bei der Montage eines Schlauchs auf einem Schlauchstutzen wird häufig eine Schlauchschelle verwendet, um den Schlauch auf dem Schlauchstutzen zu fixieren und eine sichere und dauerhafte Abdichtung zu gewährleisten. Der Arbeitsablauf besteht üblicherweise darin, dass zunächst die Schlauchschelle lose über den Schlauch geschoben wird, ein Schlauchendstück dann über den Schlauchstutzen übergeschoben wird, sodann die Schlauchschelle in einen Montagebereich im Bereich des Schlauchendstückes positioniert und gehalten wird und dann endgültig befestigt wird. Beim Befestigen der Schlauchschelle wird diese zusammengezogen, so dass durch die Schlauchschelle der Schlauch gegen den Schlauchstutzen gepresst wird.

Eine solche Schlauchschellenbefestigung ist z. B. aus DE 88 08 680 U1 bekannt. Weitere Schlauchanordnungen sind aus der DE 103 49 527 A1, der EP 1 338 840 A1, der DE 195 01 615 A1, der DE 20 102 973 U1 und der FR 2 595 437 A2 bekannt.

Der Erfindung liegt die Aufgabe zugrunde, einen Kühlflüssigkeits-Verteilerschlauch anzugeben, mit dem die zuvor beschriebene Montage mittels einer Schlauchschelle vereinfacht wird, wobei eine Batterieanordnung mit einem solchen Schlauch angegeben wird. Diese Aufgabe wird durch die in Anspruch 1 angegebene Erfindung gelöst. Die Unteransprüche geben vorteilhafte Ausgestaltungen der Erfindung an.

Die Erfindung erleichtert die Montage von Schläuchen mit Schlauchschellen. Vorteilhaft ist, dass das Schlauchendstück durch wenigstens eine von der Außenseite des Schlauchs hervorstehende Verdickungsstelle derart ausgeformt wird, dass die Schlauchschelle vor der endgültigen Fixierung verliersicher aufgesteckt werden kann. Hierdurch wird die Schlauchschelle in der für die Montage richtigen Position gehalten und muss nur noch endgültig fixiert werden, z. B. durch Anziehen einer Spannschraube oder Verbördeln oder Vercrimpen. Die Verdickungsstelle ist dabei derart ausgebildet, dass eine zur Befestigung des Schlauchs auf dem Schlauchstutzen geeignete Schlauchschelle von der Verdickungsstelle wenigstens gegenüber dem Schwerkrafteinfluss, wenn dieser in Längsrichtung des Schlauchendstücks wirksam ist, auf dem Schlauchendstück gehalten wird. Die Verdickungsstelle erlaubt dabei ein Überschieben der Schlauchschelle aufgrund der Elastizität des verwendeten Materials des Schlauchs bzw. der Verdickungsstelle. Auf diese Weise wird die Schlauchschelle zumindest gegenüber dem Einfluss der Schwerkraft sicher an dem Schlauchende gehalten und kann nicht hinunterfallen.

Die Erfindung wirkt sich insbesondere dann besonders positiv auf Montagezeiten von Schläuchen und die damit verbundenen Kosten aus, wenn eine große Anzahl von Schläuchen bzw. Schlauchendstücken auf jeweiligen Schlauchstutzen zu montieren ist, wie z. B. bei Kühlflüssigkeitssystemen, bei denen eine größere Anzahl von Kühlkreisen über eigene Schlauchstutzen mit dem Schlauch bzw. einer Mehrzahl von Schlauchendstücken verbunden werden muss. Die erfindungsgemäße Anwendung findet sich im Bereich flüssigkeitsgekühlter Batterieanordnungen für Elektro- oder Hybridfahrzeuge. Die Verdickungsstelle kann erfindungsgemäß in vielerlei Ausgestaltungen sehr unterschiedlich ausgeformt sein. Von Bedeutung ist, dass die Verdickungsstelle eine solche Formgebung des Schlauchendstückes zur Folge hat, dass die Schlauchschelle nicht ohne weiteres selbsttätig eine gewünschte Position verlassen kann. Die Verdickungsstelle kann z. B. als eine oder mehrere Noppen- oder Ring-förmige Erhebungen mit gleichmäßiger oder unregelmäßiger Formgebung ausgebildet sein. Die nach außen weisende Oberfläche der Verdickung kann glatt oder mit einer Struktur versehen sein, z. B. genoppt oder genarbt. Es können eine oder mehrere Verdickungsstellen vorgesehen sein.

Als elastisches Material für den Schlauch kommen grundsätzlich sämtliche elastischen Materialien in Frage, insbesondere gummielastische Materialien und Elastomere, wie z. B. Gummi oder Silikon. Die Verdickungsstelle kann aus dem Schlauchmaterial oder einem anderen geeigneten Material gebildet sein. Die Verdickungsstelle muss nicht zwangsläufig einstückig mit dem Schlauch hergestellt sein. Die Verdickungsstelle kann auch als Einsatzstück in eine Aufnahmestelle des Schlauchendstückes eingesetzt werden. Vorteilhaft ist jedoch eine einstückige Ausbildung der Verdickungsstelle mit dem Schlauch in einem einheitlichen Herstellprozess.

Die Verdickungsstelle kann durch Hinzufügung zusätzlichen Materials zum Schlauchendstück oder durch lokale Aufweitung des vorhandenen Schlauchmaterials hergestellt werden.

Gemäß einer vorteilhaften Weiterbildung der Erfindung verläuft die Verdickungsstelle vollständig um den Außenumfang des Schlauchs herum, z. B. in Form eines Rings.

Gemäß einer vorteilhaften Weiterbildung der Erfindung ist hierbei das Maß, um das die Verdickungsstelle von der Außenseite des Schlauchs hervorsteht, um den Außenumfang des Schlauchs herum gleich bleibend.

Gemäß einer vorteilhaften Weiterbildung der Erfindung ist die Verdickungsstelle in dem Montagebereich der Schlauchschelle angeordnet. Dies hat den Vorteil, dass schon mit einer einzigen Verdickungsstelle die Schlauchschelle in ihrer endgültigen Montageposition gehalten werden kann. Vorteilhaft ist die Verdickungsstelle vollständig um den Außenumfang des Schlauchs herum verlaufend ausgebildet, z. B. in Ringform. Ebenfalls vorteilhaft ist es, die Verdickungsstelle in Ringform, aber mit Unterbrechungen, auszugestalten. Vorteilhaft ist insbesondere die Ausgestaltung der Verdickungsstelle in Form einer Mehrzahl von um den Außenumfang entlang einer Ringform angeordneten einzelnen Lamellen, die von der Außenseite des Schlauchs hervorstehen.

Gemäß einer vorteilhaften Weiterbildung der Erfindung sind wenigstens zwei Verdickungsstellen vorgesehen, die jeweils sektorweise um den Außenumfang des Schlauchs herum verlaufen und jeweils den gleichen Abstand zur Stirnseite des Schlauchendstückes aufweisen. In einer weiteren vorteilhaften Weiterbildung sind die Verdickungsstellen in Umfangsrichtung des Schlauchs gleichmäßig voneinander beabstandet. Vorteilhaft können auch mehr als zwei Verdickungsstellen vorgesehen sein, z. B. drei bis acht.

Gemäß einer vorteilhaften Weiterbildung der Erfindung ist die Verdickungsstelle von der Stirnseite des Schlauchendstückes aus betrachtet vor dem Montagebereich für die Schlauchschelle angeordnet. Dies hat den Vorteil, dass die Schlauchschelle zunächst über die Verdickungsstelle geschoben werden kann und sodann, ohne dass das Risiko des Herunterfallens der Schlauchschelle vom Schlauchendstück besteht, das Schlauchendstück über den Schlauchstutzen geschoben werden kann. Sofern das Schlauchendstück mit einer räumlichen Orientierung erfolgt, bei der die Stirnseite in Schwerkraftrichtung zeigt, liegt die Schlauchschelle auch quasi automatisch an der richtigen Stelle des Schlauchendstückes, nämlich im Montagebereich. Eine weitere manuelle Justierung wird hierdurch entbehrlich. Hierdurch wird insbesondere eine Schlauchmontage bei nach unten weisender Stirnseite des Schlauchendstückes erleichtert.

Gemäß einer vorteilhaften Weiterbildung der Erfindung ist die Verdickungsstelle von der Stirnseite des Schlauchendstückes aus betrachtet hinter dem Montagebereich für die Schlauchschelle angeordnet. Dies hat den Vorteil, dass durch die Verdickungsstelle ein Wegrutschen der Schlauchschelle in einen von der Stirnseite des Schlauchendstückes weiter fort gelegenen Schlauchabschnitt verhindert wird. Insbesondere bei Vorhandensein einer Schwerkraftkomponente bei der Montage der Schlauchschelle von der Stirnseite fort ergibt sich der Vorteil, dass die Schlauchschelle in ihrer Montageposition im Montagebereich des Schlauchendstückes gehalten wird.

Ebenfalls vorteilhaft ist es, sowohl eine Verdickungsstelle vor dem Montagebereich als auch eine weitere Verdickungsstelle hinter dem Montagebereich vorzusehen. Hierdurch kann die Schlauchschelle in beiden Richtungen fixiert werden.

Gemäß einer vorteilhaften Weiterbildung der Erfindung ist wenigstens eine erste Verdickungsstelle von der Stirnseite des Schlauchendstückes aus betrachtet vor dem Montagebereich für die Schlauchschelle angeordnet. Wenigstens eine zweite Verdickungsstelle ist von der Stirnseite des Schlauchendstückes aus betrachtet hinter dem Montagebereich für die Schlauchschelle angeordnet. Der Abstand zwischen der ersten und der zweiten Verdickungsstelle ist gleich oder geringfügig größer als die Breite der Schlauchschelle. Hierdurch wird die Schlauchschelle in einer bestimmten Position fixiert und hat kein oder nur wenig Spiel in Längsrichtung des Schlauchsendstücks.

Gemäß einer vorteilhaften Weiterbildung der Erfindung nimmt das Maß, um das die Verdickungsstelle von der Außenseite des Schlauchs hervorsteht, in Richtung zur Stirnseite des Schlauchendstückes hin ab. Die Abnahme kann z. B. linear oder bogenförmig verlaufen. Hierdurch wird eine gewisse Schräge der Verdickungsstelle in Richtung zur Stirnseite hin vorgesehen, die das Aufsetzen und Führen der Schlauchschelle über die Verdickungsstelle hinüber bis in den Montagebereich erleichtert.

Gemäß einer vorteilhaften Weiterbildung der Erfindung ist die Summe aus dem Außendurchmesser des Schlauchendstückes und dem Maß, um das die Verdickungsstelle von der Außenseite des Schlauchs hervorsteht, größer als der Innendurchmesser der Schlauchschelle im unbefestigten Zustand. Als unbefestigter Zustand sei der Lieferzustand der Schlauchschelle verstanden. Dies hat den Vorteil, dass ein sicherer Halt der Schlauchschelle auf dem Schlauchendstück ermöglicht wird.

Gemäß einer vorteilhaften Weiterbildung der Erfindung verläuft die Verdickungsstelle vollständig um den Außenumfang des Schlauchs herum, weist in Draufsicht auf die Stirnseite des Schlauchendstücks eine kreisrunde Außenkontur auf und hat einen Durchmesser, der größer ist als der Innendurchmesser der Schlauchschelle im unbefestigten Zustand. Dies erlaubt eine einfache Herstellung der Verdickungsstelle.

Gemäß einer vorteilhaften Weiterbildung der Erfindung liegt das Maß, um das die Verdickungsstelle von der Außenseite des Schlauchs hervorsteht, im Bereich von 1 bis 4 mm. Dies hat den Vorteil, dass der Einsatz von Schlauchschellen mit Normdurchmessern begünstigt wird. Für jeden üblichen Schlauchdurchmesser kann eine geeignete Schlauchschelle mit einem Normdurchmesser ausgewählt werden. Diese lässt sich dann einerseits bequem und beschädigungsfrei über die Verdickungsstelle hinüberschieben und wird außerdem nach dem Hinüberschieben von der Verdickungsstelle gehalten.

Gemäß der Erfindung weist der Schlauch wenigstens zwei Abzweigungsstellen auf. An den Abzweigungsstellen ist jeweils ein Schlauchabschnitt mit jeweils einem Schlauchendstück angeordnet. Ein solcher Schlauch dient als Verteilerschlauch (Manifold) zur Weiterleitung und Verteilung von Kühlflüssigkeit. Der Schlauch kann insbesondere mit einer größeren Anzahl von Abzweigungsstellen versehen sein, z. B. 6 oder 10. Durch die jeweils an den Schlauchendstücken vorgesehenen Verdickungsstellen wird die Montage eines solchen Schlauchs mittels Schlauchschellen erleichtert und beschleunigt.

Zusätzlich sind sämtliche zuvor beschriebenen Ausführungsformen des Schlauchs bzw. der Verdickungsstellen vorteilhaft miteinander kombinierbar.

Die Erfindung betrifft eine Batterieanordnung für Elektro- oder Hybridfahrzeuge mit einer Mehrzahl von einzelnen Batterieelementen, die jeweils einen Kühlmittel-Zufuhranschluss und einen Kühlmittel-Abfuhranschluss aufweisen, wobei die Kühlmittel-Zufuhranschlüsse untereinander und mit einer Kühlmittelquelle über einen Kühlflüssigkeits-Verteilerschlauch der zuvor beschriebenen Art und/oder die Kühlmittel-Abfuhranschlüsse untereinander und mit einem Kühlmittelsenke über einen Kühlflüssigkeits-Verteilerschlauch der zuvor beschriebenen Art verbunden sind. Jedes Batterieelement kann beispielsweise eine Mehrzahl von zylindrischen Rundzellen oder prismatischen Zellen aufweisen.

Die Erfindung wird nachfolgend anhand von Ausführungsbeispielen unter Verwendung von Zeichnungen näher erläutert.

Es zeigen:
- Figur 1: einen Schlauch und eine Schlauchschelle und
- Figur 2: den Schlauch gemäß Figur 1 mit aufgesetzter Schlauchschelle und
- Figur 3: eine weitere Ausführungsform eines Schlauchs und eine Schlauchschelle und
- Figur 4: den Schlauch gemäß Figur 3 mit aufgesetzter Schlauchschelle und
- Figur 5: eine weitere Ausführungsform eines Schlauchs und eine Schlauchschelle und
- Figur 6: ein Schlauchsegment im Querschnitt und
- Figur 7: eine weitere Ausführungsform eines Schlauchs und
- Figur 8: den Schlauch gemäß Figur 7 mit aufgesetzter Schlauchschelle und
- Figur 9: eine weitere Ausführungsform eines Schlauchs und
- Figur 10: den Schlauch gemäß Figur 9 mit aufgesetzter Schlauchschelle und
- Figur 11: eine erfindungsgemäße Ausführungsform eines Schlauchs mit aufgesetzten Schlauchschellen und
- Figur 12: eine Batterieanordnung für Elektro- oder Hybridfahrzeuge.

In den Figuren werden gleiche Bezugszeichen für einander entsprechende Elemente verwendet.

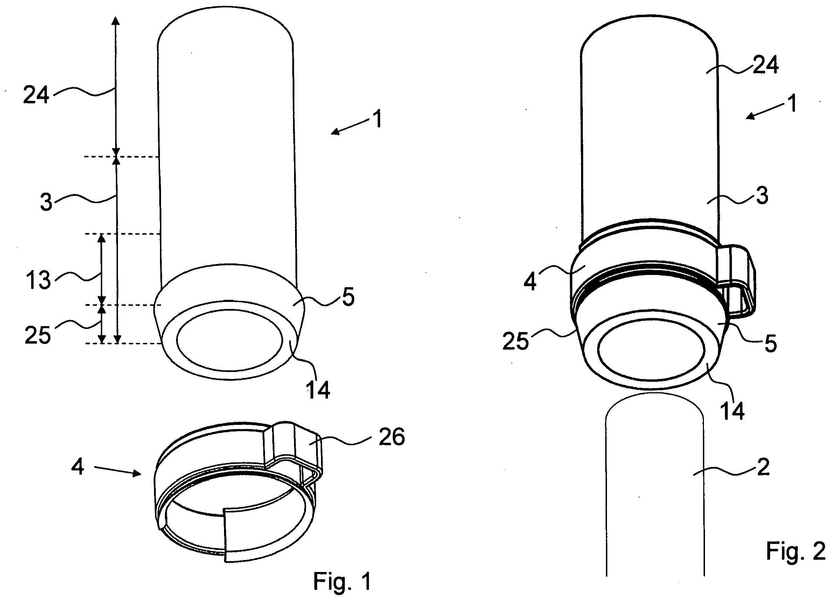

In der Figur 1 sind ein Schlauch 1 und eine Schlauchschelle 4 dargestellt. Der Schlauch 1 weist ein Schlauchendstück 3 auf, in dem der Schlauch 1 an einer Stirnfläche 14 endet. In der von der Stirnfläche 14 abgewandten Richtung erstreckt sich der Schlauch 1 jenseits des Schlauchendstückes 3 über einen Schlauchabschnitt 24, der je nach Anwendungsfall eine unterschiedliche Länge aufweisen kann und in den Figuren der besseren Übersicht halber nur als kurzes Schlauchstück dargestellt ist. Das Schlauchendstück weist einen Montagebereich 13 für eine Schlauchschelle 4 auf. Die Schlauchschelle 4 wird über das Schlauchendstück 3 bis in den Montagebereich 13 geschoben und kann dann fixiert werden. Im Allgemeinen weist der Schlauch 1 einen über den Montagebereich 13 zur Stirnfläche 14 hin überstehenden Schlauchabschnitt 25 auf, da in der Regel erwünscht ist, dass die Schlauchschelle nicht am äußersten Ende des Schlauchendstücks 3 montiert wird.

Der Schlauch 1 gemäß Figur 1 weist in dem Schlauchabschnitt 25, der von der Stirnfläche 14 aus gesehen vor dem Montageabschnitt 13 liegt, eine an der Außenseite des Schlauchs 1 hervorstehende, aus dem Schlauchmaterial gebildete Verdickungsstelle 5 auf. Die Verdickungsstelle 5 ist radial umlaufend um den Außenumfang des Schlauchendstücks 3 ausgebildet. In der dargestellten Ausführungsform ist die Verdickungsstelle 5 mit einer Verjüngung in Richtung zur Stirnseite 14 hin ausgebildet, z.B. in Kegelstumpfform.

Die in Figur 1 ebenfalls dargestellte Schlauchschelle 4 ist vom Bördel- bzw. Crimp-Typ. Hierfür weist die Schlauchschelle 4 einen Bördelbereich 25 auf, der zum Befestigen der Schlauchschelle 4 auf dem Schlauch 1 mit einem geeigneten Werkzeug zusammengepresst wird.
Hierdurch verringert sich der Durchmesser der Schlauchschelle, was zur Fixierung des Schlauchs auf einem Schlauchstutzen führt.

Die Figur 2 zeigt den Schlauch 1 sowie die Schlauchschelle 4 gemäß Figur 1 bei auf dem Schlauch 1 bereits aufgeschobener Schlauchschelle 4. Zudem ist ein Schlauchstutzen 2 dargestellt, auf den der Schlauch 1 mit der Schlauchschelle 4 übergeschoben werden soll.

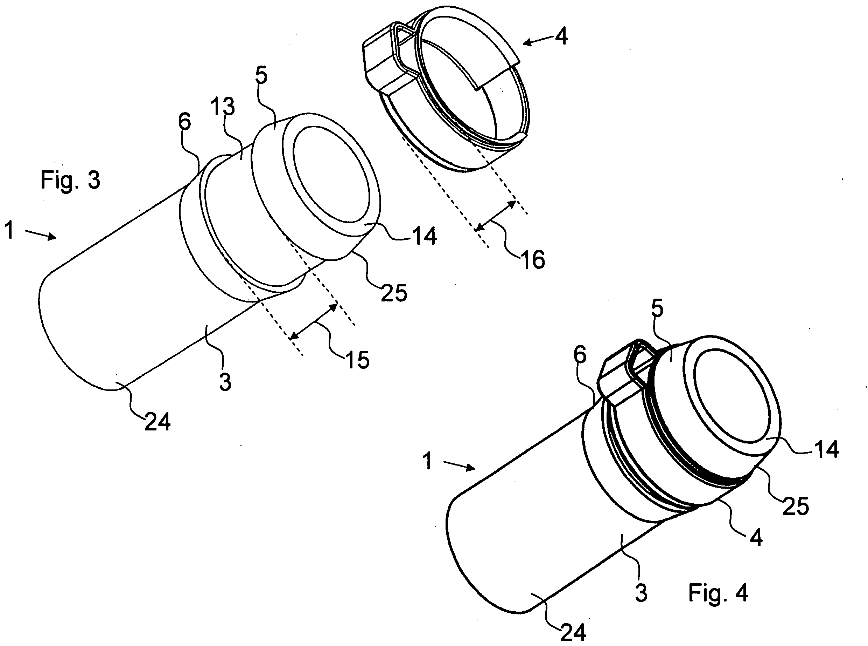

Die Figur 3 zeigt eine weitere Ausführungsform eines Schlauchs 1, bei der zusätzlich zu der Verdickungsstelle 5 im Schlauchabschnitt 25 noch eine weitere Verdickungsstelle 6 in einem weiter von der Stirnseite 14 fort gelegenen Bereichs des Schlauchendstücks 3 angeordnet ist. Die weitere Verdickungsstelle 6 ist dabei von der Stirnseite 14 aus gesehen hinter dem Montagebereich 13 für die Schlauchschelle 4 angeordnet. Hierbei ist der Abstand 15 zwischen den Verdickungsstellen 5, 6 so gewählt, dass er gleich oder geringfügig größer ist als die Breite 16 der Schlauchschelle 4. Hierdurch kann die Schlauchschelle 4 ohne Mühe in dem Montagebereich 13 zwischen den zwei Verdickungsstellen 5, 6 positioniert werden und wird durch die zwei Verdickungsstellen 5, 6 von einer unerwünschten Deplatzierung in beiden Richtungen in Längsrichtung des Schlauchs 1 gehindert.

Die Figur 4 zeigt den Schlauch 1 sowie die Schlauchschelle 4 gemäß Figur 3 bei über den Schlauch 1 geschobener Schlauchschelle 4.

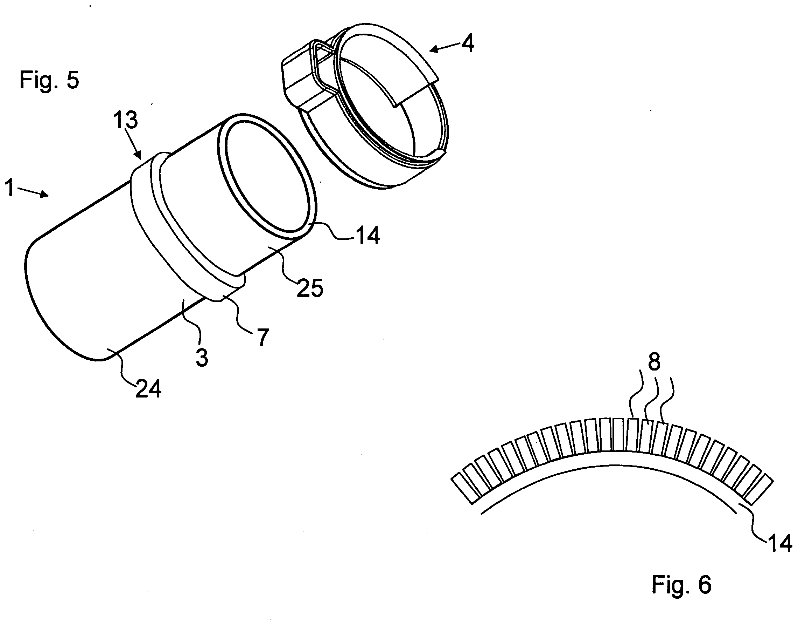

Die Figur 5 zeigt eine weitere Ausführungsform eines Schlauchs 1, bei dem eine ringförmig ausgebildete Verdickung 7 an dem Schlauchendstück 3 ausgebildet ist, und zwar in dem Montagebereich 13 für die Schlauchschelle 4.

Die Schlauchschelle 4 kann dabei mit leichtem Kraftaufwand über die Verdickungsstelle 7 geschoben werden und wird aufgrund der Elastizität des Materials der Verdickungsstelle 7 sowie des Schlauchs 1 durch Pressung in der jeweiligen Position gehalten.

Die Verdickung 7 kann, wie in der Figur 5 dargestellt, als umlaufender Ring ohne Unterbrechungen ausgebildet sein. Die Figur 6 zeigt eine alternative Ausgestaltung der Verdickungsstelle 7, bei der von der Außenseite des Schlauchs 1 eine Vielzahl von kleinen Lamellen 8, die dicht nebeneinander angeordnet sind, abstehen. Der Schlauch 1 ist hierbei in einer Draufsicht auf die Stirnfläche 14 dargestellt, wobei die Figur 6 nur einen sektorartigen Ausschnitt zeigt.

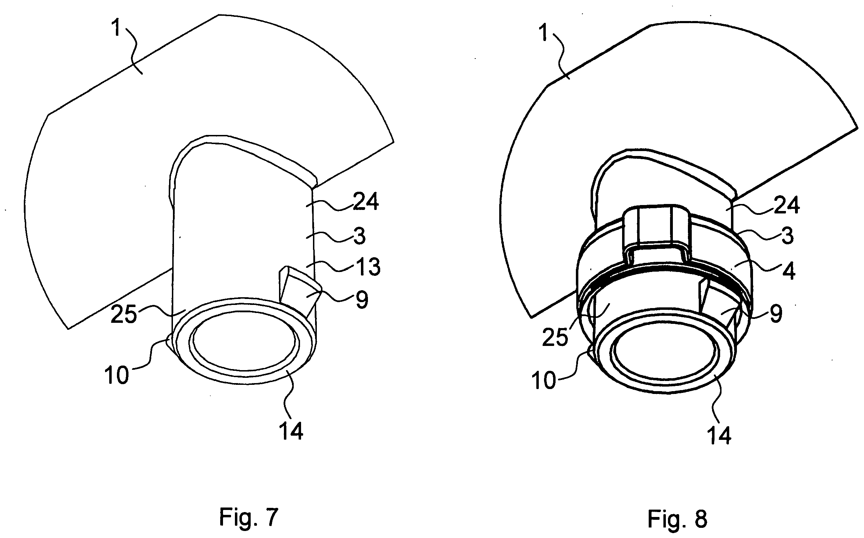

Die Figur 7 zeigt eine weitere Ausführungsform eines Schlauchs 1, bei dem das Schlauchendstück 3 in einen Winkel von dem Schlauch 1 abzweigt. Des Weiteren wird anhand der Figur 7 eine weitere Ausführungsform der erwähnten Verdickungen dargestellt, nämlich zwei radial einander gegenüberliegende Verdickungen 9, 10, die ausgehend von der Stirnfläche 14 vor dem Montagebereich 13 angeordnet sind. Die Verdickungen 9, 10 sind etwa kreissektorartig ausgebildet und weisen ein in Längsrichtung des Schlauchendstücks 3 verjüngend verlaufendes Profil auf, derart, dass sich, ausgehend von der Stirnfläche 14, ein etwa rampenartiger Anstieg der Bauhöhe der Verdickungen 9, 10 ergibt.

Die Figur 8 zeigt den Schlauch 1 gemäß Figur 7 mit über das Schlauchendstück 3 geschobener Schlauchschelle 4.

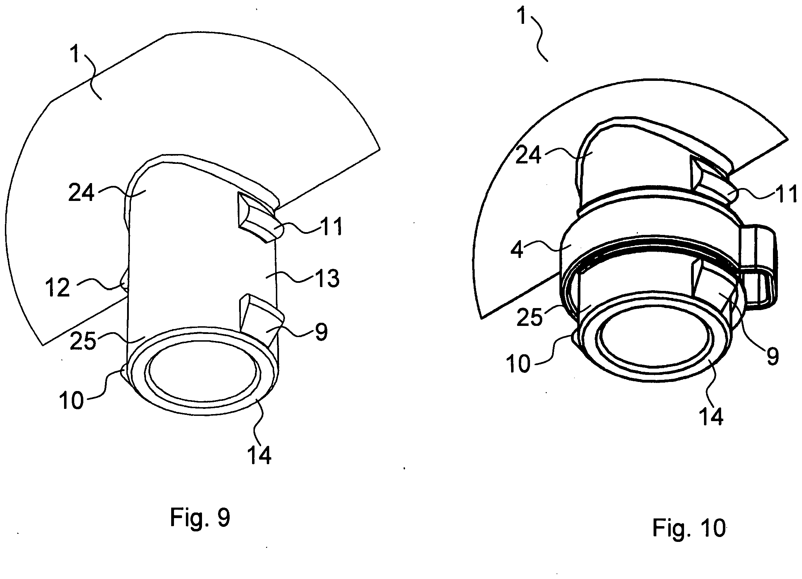

Die Figur 9 zeigt eine weitere Ausführungsform eines Schlauchs. Im Unterschied zur Figur 7 sind außer den Verdickungen 9, 10 im Schlauchabschnitt 25 des Schlauchendstückes 3 weitere Verdickungen 11, 12 vorgesehen, die, ausgehend von der Stirnfläche 14, hinter dem Montagebereich 13 angeordnet sind. Die Verdickungen 11, 12 sind im Wesentlichen mit gleicher Formgebung wie die Verdickungen 9, 10 ausgebildet, weisen jedoch mit ihrer abgeschrägten Kontur in die entgegengesetzte Richtung wie die Verdickungen 9, 10.

Die Figur 10 zeigt den Schlauch 1 gemäß Figur 9 mit über das Schlauchendstück 3 geschobener Schlauchschelle 4.

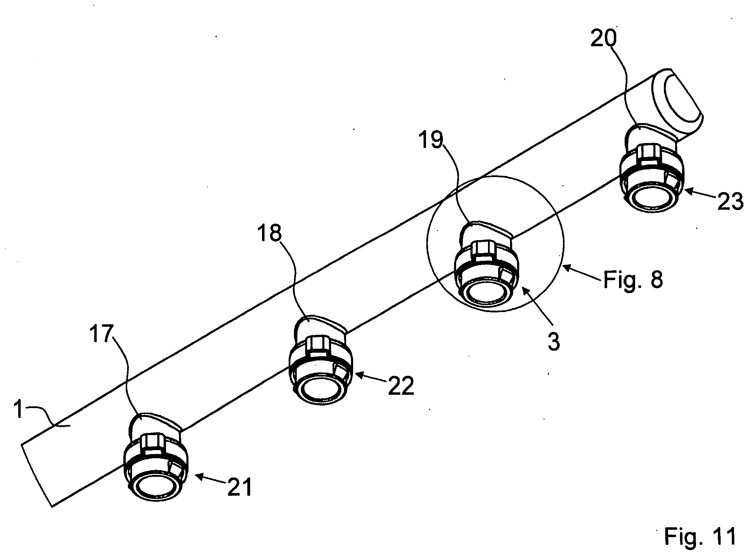

Die Figur 11 zeigt einen Schlauch 1 mit einer Mehrzahl von Abzweigungsstellen 17, 18, 19, 20, wobei in der Figur 11 vier Abzweigungsstellen dargestellt sind, jedoch auch mehr oder weniger Abzweigungsstellen vorteilhaft realisierbar sind. Die Abzweigungsstellen 17, 18, 19, 20 weisen jeweils ein Schlauchendstück 3, 21, 22, 23 auf. Die Schlauchendstücke 3, 21, 22, 23 sind mit Verdickungsstellen der zuvor beschriebenen Art ausgebildet, wobei in der Figur 11 beispielhaft die Ausführungsform gemäß Figur 8 wiedergegeben ist. Jedoch können auch die anderen beschriebenen Ausführungsformen vorgesehen werden. Über die Schlauchendstücke 3, 21, 22, 23 sind jeweils Schlauchschellen geschoben.

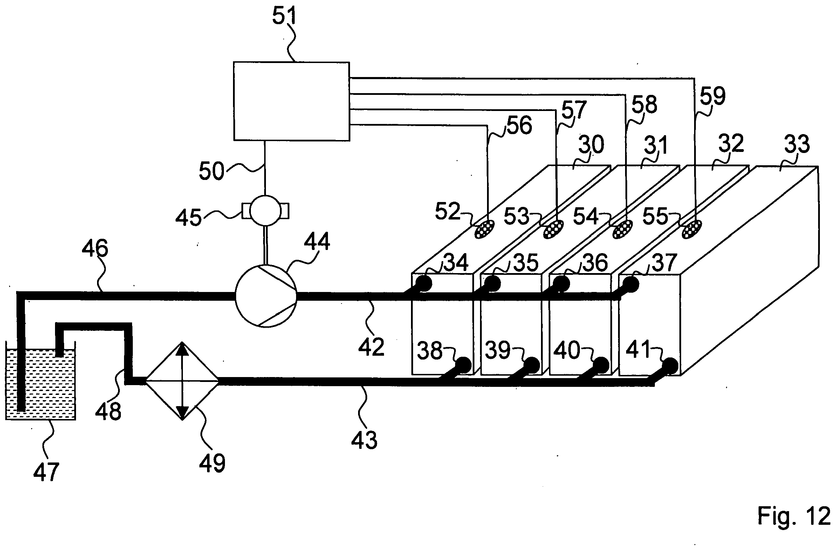

Die Figur 12 zeigt eine Batterieanordnung für Elektro- oder Hybridfahrzeuge. Die Batterieanordnung weist mehrere Batterieelemente 30, 31, 32, 33 auf, wobei in Figur 12 beispielhaft vier Batterieelemente dargestellt sind, jedoch auch mehr oder weniger Batterieelemente vorteilhaft möglich sind. Die Batterieelemente 30, 31, 32, 33 enthalten eine Mehrzahl von einzelnen Batteriezellen, die im Betrieb der Kühlung bedürfen. Aus diesem Grunde weist jedes Batterieelement 30, 31, 32, 33 eine interne Kühlmittelverteilung auf. Für die Zufuhr des Kühlmittels weist jedes Batterieelement 30, 31, 32, 33 einen eigenen Kühlmittel-Zufuhranschluss 34, 35, 36, 37 auf. Für die Abfuhr des durch das jeweilige Batterieelement 30, 31, 32, 33 geflossenen Kühlmittels weist jedes Batterieelement einen Kühlmittel-Abfuhranschluss 38, 39, 40, 41 auf. Die Kühlmittel-Zufuhranschlüsse sowie die Kühlmittel-Abfuhranschlüsse sind jeweils mit einem Schlauchstutzen ausgebildet, der für die Montage eines Schlauchs zur Zufuhr und Abfuhr des Kühlmittels dient. Die Kühlmittel-Zufuhranschlüsse 34, 35, 36, 37 sind über einen Schlauch 42 der zuvor beschriebenen Art, insbesondere einem Schlauch gemäß Figur 11, mit einer Kühlmittelquelle 44, 47 verbunden. Die Kühlmittelquelle 44, 47 weist z.B. eine Kühlflüssigkeitspumpe 44 und Kühlflüssigkeitsvorratsbehälter 47 auf. Der Schlauch 42 ist dabei an die Kühlflüssigkeitspumpe 44 angeschlossen. Die Kühlflüssigkeitspumpe 44 ist eingangsseitig wiederum über einen weiteren Schlauch 46 mit einem Kühlflüssigkeitsvorratsbehälter 47 verbunden. Die Kühlmittel-Abfuhranschlüsse 38, 39, 40, 41 sind über einen Schlauch 43 der zuvor beschriebenen Art, insbesondere einem Schlauch gemäß Figur 11, mit einer Kühlmittelsenke 47, 49 verbunden. Die Kühlmittelsenke 47, 49 weist z.B. einen Wärmetauscher 49 und den Kühlflüssigkeitsvorratsbehälter 47 auf. Der Schlauch 43 ist dabei mit einem Eingangsanschluss des Wärmetauschers 49 verbunden. Der Wärmetauscher 49 kann z. B. als Kühler ausgebildet sein. Ausgangsseitig ist der Wärmetauscher 49 über einen weiteren Schlauch 48 mit dem Kühlflüssigkeitsbehälter 47 verbunden.

Die Batterieanordnung gemäß Figur 12 weist zudem ein elektronisches Steuergerät 51 auf, das die Temperatur der Batterieelemente 30, 31, 32, 33 überwacht und hiervon abhängig die Kühlflüssigkeitspumpe 44 steuert. Hierfür ist jedes der Batterieelemente 30, 31, 32, 33 mit einem Temperatursensor 52, 53, 54, 55 versehen.

Die Temperatursensoren 52, 53, 54, 55 sind über jeweilige elektrische Leitungen 56, 57, 58, 59 mit dem elektronischen Steuergerät 51 verbunden. Das elektronische Steuergerät 51 ist außerdem über eine elektrische Leitung 50 mit einem Elektromotor 45 verbunden. Der Elektromotor 45 ist über eine Welle mit der Kühlflüssigkeitspumpe 44 verbunden. Der Elektromotor 45 dient zum Antrieb der Kühlflüssigkeitspumpe 44. Die elektronische Steuereinrichtung steuert den Elektromotor 55, z. B. über Drehzahlregelung, derart, dass die Batterieelemente 30, 31, 32, 33 in ausreichender Weise mit der Kühlflüssigkeit versorgt werden und die entstehende Wärme soweit abgeführt wird, dass keines der Batterieelemente 30, 31, 32, 33 sich in unzulässiger Weise erwärmt.

## Patentansprüche

1. Batterieanordnung für Elektro- oder Hybridfahrzeuge mit einer Mehrzahl von einzelnen Batterieelementen (30, 31, 32, 33), die jeweils einen Kühlmittel-Zufuhranschluss (34, 35, 36, 37) und einen Kühlmittel-Abfuhranschluss 2. (38, 39, 40, 41) aufweisen, wobei die Kühlmittel-Zufuhranschlüsse (34, 35, 36, 37) untereinander und mit einer Kühlmittelquelle (44, 47) über einen Kühlflüssigkeits-Verteilerschlauch (42) und/oder die Kühlmittel-Abfuhranschlüsse (38, 39, 40, 41) untereinander und mit einem Kühlmittelsenke (47, 49) über einen Kühlflüssigkeits-Verteilerschlauch (43) verbunden sind, wobei der Kühlflüssigkeits-Verteilerschlauch (42, 43) aus einem elastischen Material besteht und wenigstens zwei Abzweigungsstellen (17, 18, 19, 20) aufweist, an denen jeweils ein Schlauchabschnitt mit jeweils einem Schlauchendstück (3, 21, 22, 23) angeordnet ist, wobei jeder Schlauchabschitt jeweils zur Montage auf einem Schlauchstutzen (2) durch Überschieben eines Schlauchendstücks (3) des Schlauchs (1) über den Schlauchstutzen (2) und zur Befestigung auf dem Schlauchstutzen (2) durch eine in einem Montagebereich (13) des Schlauchendstücks (3) anzuordnende Schlauschelle (4) ausgebildet ist, wobei jedes Schlauchendstück (3) jeweils wenigstens eine von der Außenseite des Schlauchendstücks (3) hervorstehende Verdickungsstelle (5, 6, 7, 8, 9, 10, 11, 12) aufweist, die wenigstens soweit von der Außenseite des Schaluchendstücks (3) hervorsteht, dass die zur Befestigung des Schlauchendstücks (3) auf dem Schlauchstutzen (2) geeignete Schlauchschelle (4) von der Verdickungsstelle (5, 6, 7, 8, 9, 10, 11, 12) gegenüber dem Schwerkrafteinfluss, wenn diese in Längsrichtung des Schlauchendstücks (3) wirksam ist, auf dem Schlauchendstück (3) gehalten ist.

2. Batterieanordnung nach Anspruch 1,
**dadurch gekennzeichnet, dass**
die Verdickungsstelle(5, 6, 7, 8, 9, 10, 11, 12) vollständig um den Außenumfang des Schlauchendstücks (3) herum verläuft.

3. Batterieanordnung nach einem der vorhergehenden Ansprüche,
**dadurch gekennzeichnet, dass**
die Verdickungsstelle (5, 6, 7, 8, 9, 10, 11, 12) in dem Montagebereich (13) für Schlauchschelle (4) angeordnet ist.

4. Batterieanordnung nach einem der vorhergehenden Ansprüchen,
**dadurch gekennzeichnet, dass**
wenigstens zwei Verdickungsstellen (5, 6, 7, 8, 9, 10, 11, 12) vorgesehen sind, jeweils sektorweise um den Außenumfang des Schlauchendstücks (3) herum verlaufen und jeweils den gleichen Abstand zur Stirnseite (14) des Schlauchendstücks (3) aufweisen.

5. Batterieanordnung nach einem der vorhergehenden Ansprüche,
**dadurch gekennzeichnet, dass**
die Verdickungsstelle (5, 6, 7, 8, 9, 10, 11, 12) von der Stirnseite (14) des Schlauchendstücks (3) aus betrachtet vor dem Montagebereich (13) für die Schlauchschelle (4) angeordnet ist.

6. Batterieanordnung nach einem der vorhergehenden Ansprüche,
**dadurch gekennzeichnet, dass**
die Verdickungsstelle (5, 6, 7, 8, 9, 10, 11, 12) von der Stirnseite (14) des Schlauendstücks (3) aus betrachtet hinter dem Montagebereich (13) für die Schlauchschelle (4) angeordnet ist.

7. Batterieanordnung nach einem der vorhergehenden Ansprüche,
**dadurch gekennzeichnet, dass**
wenigstens eine erste Verdickungsstelle (5, 9, 10) von der Stirnseite (14) des Schlauchendstücks (3) aus betrachtet vor dem Montagebereich (13) für die Schlauchschelle (4) angeordnet ist und wenigsten eine zweite Verdickungsstelle (6, 11, 12) von der Stirnseite (14) des Schlauchendstücks (3) aus betrachtet hinter dem Montagebereich (13) für die Schlauchschelle (4) angeordnet ist, wobei der Abstand (15) zwischen der ersten und der zweiten Verdickungsstelle (5, 6, 7, 8, 9, 10, 11, 12) gleich oder geringfügig größer ist als die Breite (16) der Schlauchschelle (4).

8. Batterieanordnung nach einem der vorhergehenden Ansprüche,
**dadurch gekennzeichnet, dass**
das Maß, um das die Verdickungsstelle (5, 6, 7, 8, 9, 10, 11, 12) von der Außenseite des Schlauchendstücks (3) hervorsteht, in Richtung zur Stirnseite (14) des Schlauchendstücks (3) hin abnimmt.

9. Batterieanordnung nach einem der vorhergehenden Ansprüche,
**dadurch gekennzeichnet, dass**
die Summe aus dem Außendurchmesser des Schlauchendstücks (3) und dem Maß, um das die Verdickungsstelle (5, 6, 7, 8, 9, 10, 11, 12) von der Außenseite des Schlauchendstücks (3) hervorsteht, größer ist als der Innendurchmesser der Schlauchschelle (4) im unbefestigten Zustand.

10. Batterieanordnung nach einem der vorhergehenden Ansprüche,
**dadurch gekennzeichnet, dass**
die Verdickungsstelle (5, 6, 7, 8, 9, 10, 11, 12) vollständig um den Außenumfang des Schlauchendstücks (3) herum verläuft, in Draufsicht auf die Stirnseite (14) des Schlauchendstücks (3) eine kreisrunde Außenkontur aufweist und einen Durchmesser hat, der größer ist als der Innendurchmesser der Schlauchschelle (4) im unbefestigten Zustand.

11. Batterieanordnung nach einem der vorhergehenden Ansprüche,
**dadurch gekennzeichnet, dass**
das Maß, um das die Verdickungsstelle (5, 6, 7, 8, 9, 10, 11, 12) von den Außenseiten des Schlauchendstücks (3) hervorsteht, im Bereich von 1 bis 4 mm liegt.

## Claims

1. A battery system (100) for electric or hybrid vehicles comprising a plurality of individual battery cells (30, 31, 32, 33), each having a coolant supply connection (34, 35, 36, 37) and a coolant discharge connection (38, 39, 40, 41), wherein the coolant supply connections (34, 35, 36, 37) are interconnected and connected to a coolant source (44, 47) via a coolant distribution hose (42) and/or the coolant discharge connections (38, 39, 40, 41) are interconnected and connected to a coolant sink (47, 49) via a coolant distribution hose (43), wherein the coolant distribution hose (42, 43) consists of an elastic material and comprises at least two branching points (17, 18, 19, 20), at each of which a hose section with a respective hose end piece (3, 21, 22, 23) is disposed, wherein each hose section is designed to be fitted on a hose connector (2) by means of a hose end piece (3) of the hose (1) being pushed over the hose connector (2) and to be fastened to the hose connector (2) by means of a hose clip (4) to be arranged in a fitting area (13) of the hose end piece (3), wherein each hose end piece (3) has at least one thickened region (5, 6, 7, 8, 9, 10, 11, 12) protruding from the outer side of the hose end piece (3) which protrudes from the outer side of the hose end piece (3) at least far enough for the thickened region (5, 6, 7, 8, 9, 10, 11, 12) to hold a hose clip (4) suitable for fastening the hose end piece (3) onto the hose connector (2) on the hose end piece (3) against the influence of gravity when same acts in the longitudinal direction of the hose end piece (3).

2. The battery system according to claim 1,
**characterized in that**
the thickened region (5, 6, 7, 8, 9, 10, 11, 12) extends completely around the outer circumference of the hose end piece (3).

3. The battery system according to one of the preceding claims,
**characterized in that**
the thickened region (5, 6, 7, 8, 9, 10, 11, 12) is arranged in the fitting area (13) for the hose clip (4).

4. The battery system according to one of the preceding claims,
**characterized in that**
at least two thickened regions (5, 6, 7, 8, 9, 10, 11, 12) are provided, each extending in sectors around the outer circumference of the hose end piece (3) and each having the same spacing from the end face (14) of the hose end piece (3).

5. The battery system according to one of the preceding claims,
**characterized in that**
the thickened region (5, 6, 7, 8, 9, 10, 11, 12), viewed from the end face (14) of the hose end piece (3), is arranged in front of the fitting area (13) for the hose clip (4).

6. The battery system according to one of the preceding claims,
**characterized in that**
the thickened region (5, 6, 7, 8, 9, 10, 11, 12), viewed from the end face (14) of the hose end piece (3), is arranged behind the fitting area (13) for the hose clip (4).

7. The battery system according to one of the preceding claims,
**characterized in that**
at least one first thickened region (5, 9, 10), viewed from the end face (14) of the hose end piece (3), is arranged in front of the fitting area (13) for the hose clip (4) and at least one second thickened region (6, 11, 12), viewed from the end face (14) of the hose end piece (3), is arranged behind the fitting area (13) for the hose clip (4), wherein the spacing (15) between the first and the second thickened region (5, 6, 7, 8, 9, 10, 11, 12) is equal to or slightly greater than the width (16) of the hose clip (4).

8. The battery system according to one of the preceding claims,
**characterized in that**
the dimension by which the thickened region (5, 6, 7, 8, 9, 10, 11, 12) protrudes from the outer side of the hose end piece (3) decreases toward the end face (14) of the hose end piece (3).

9. The battery system according to one of the preceding claims,
**characterized in that**
the sum of the outer diameter of the hose end piece (3) and the dimension by which the thickened region (5, 6, 7, 8, 9, 10, 11, 12) protrudes from the outer side of the hose end piece (3) is greater than the inner diameter of the hose clip (4) in the unsecured state.

10. The battery system according to one of the preceding claims,
**characterized in that**
the thickened region (5, 6, 7, 8, 9, 10, 11, 12) extends completely around the outer circumference of the hose end piece (3), exhibits a circular outer contour when the end face (14) of the hose end piece (3) is viewed from above, and has a diameter which is larger than the inner diameter of the hose clip (4) in the unsecured state.

11. The battery system according to one of the preceding claims,
**characterized in that**
the dimension by which the thickened region (5, 6, 7, 8, 9, 10, 11, 12) protrudes from the outer sides of the hose end piece (3) is in the range of from 1 to 4 mm.

## Revendications

1. Agencement de batterie pour véhicules électriques ou hybrides,
comportant une pluralité d'éléments de batterie individuels (30, 31, 32, 33) qui comprennent chacun un raccord d'alimentation en réfrigérant (34, 35, 36, 37) et un raccord d'évacuation de réfrigérant (38, 39, 40, 41), dans lequel
les raccords d'alimentation en réfrigérant (34, 35, 36, 37) sont reliés entre eux et à une source de réfrigérant (44, 47) par un tuyau de répartition de liquide réfrigérant (42) et/ou les raccords d'évacuation de réfrigérant (38, 39, 40, 41) sont reliés entre eux et à une bâche à réfrigérant (47, 49) par un tuyau de répartition de liquide réfrigérant,
le tuyau de répartition de liquide réfrigérant (42, 43) est constitué en un matériau élastique et comprend au moins deux emplacements de dérivation (17, 18, 19, 20) auxquels est agencée une portion de tuyau respective chacune avec un embout de tuyau (3, 21, 22, 23),
chaque portion de tuyau est réalisée sous forme de collier (4) qui est destiné au montage sur un manchon de tuyau (2) par enfilement d'un embout (3) du tuyau (1) par-dessus le manchon de tuyau (2) et à la fixation sur le manchon de tuyau (2) et qui est à agencer dans une zone de montage (13) de l'embout de tuyau (3),
chaque embout de tuyau (3) présente un emplacement d'épaississement (5, 6, 7, 8, 9, 10, 11, 12) qui fait saillie du côté extérieur de l'embout de tuyau (3) et qui dépasse au moins aussi loin du côté extérieur de l'embout de tuyau (3) que le collier (4) approprié à la fixation de l'embout de tuyau (3) sur le manchon de tuyau (2) est retenu sur l'embout de tuyau (3) par l'emplacement d'épaississement (5, 6, 7, 8, 9, 10, 11, 12) par rapport à l'effet de la gravité lorsque celle-ci agit en direction longitudinale de l'embout de tuyau (3).

2. Agencement de batterie selon la revendication 1,
**caractérisé en ce que**
l'emplacement d'épaississement (5, 6, 7, 8, 9, 10, 11, 12) s'étend complètement autour de la périphérie extérieure de l'embout de tuyau (3).

3. Agencement de batterie selon l'une des revendications précédentes,
**caractérisé en ce que**
l'emplacement d'épaississement (5, 6, 7, 8, 9, 10, 11, 12) est agencé dans la zone de montage (13) pour le collier (4).

4. Agencement de batterie selon l'une des revendications précédentes,
**caractérisé en ce que**
il est prévu au moins deux emplacements d'épaississement (5, 6, 7, 8, 9, 10, 11, 12) qui s'étendent chacun par secteur autour de la périphérie extérieure de l'embout de tuyau (3) et qui présentent la même distance à la face frontale (14) de l'embout de tuyau (3).

5. Agencement de batterie selon l'une des revendications précédentes,
**caractérisé en ce que**
l'emplacement d'épaississement (5, 6, 7, 8, 9, 10, 11, 12), vu depuis la face frontale (14) de l'embout de tuyau (3), est agencé en avant de la zone de montage (13) pour le collier (4).

6. Agencement de batterie selon l'une des revendications précédentes,
**caractérisé en ce que**
l'emplacement d'épaississement (5, 6, 7, 8, 9, 10, 11, 12), vu depuis la face frontale (14) de l'embout de tuyau (3), est agencé en arrière de la zone de montage (13) pour le collier (4).

7. Agencement de batterie selon l'une des revendications précédentes,
**caractérisé en ce que**
au moins un premier emplacement d'épaississement (5, 9, 10), vu depuis la face frontale (14) de l'embout de tuyau (3), est agencé en avant de la zone de montage (13) pour le collier (4), et au moins un second emplacement d'épaississement (6, 11, 12), vu depuis la face frontale (14) de l'embout de tuyau (3), est agencé en arrière de la zone de montage (13) pour le collier (4),
la distance (15) entre le premier et le second emplacement d'épaississement (5, 6, 7, 8, 9, 10, 11, 12) est égale ou légèrement supérieure à la largeur (16) du collier (4).

8. Agencement de batterie selon l'une des revendications précédentes,
**caractérisé en ce que**
la valeur de laquelle l'emplacement d'épaississement (5, 6, 7, 8, 9, 10, 11, 12) dépasse du côté extérieur de l'embout de tuyau (3), décroit en direction de la face frontale (14) l'embout de tuyau (3).

9. Agencement de batterie selon l'une des revendications précédentes,
**caractérisé en ce que**
la somme du diamètre extérieur de l'embout de tuyau (3) et de la valeur de laquelle l'emplacement d'épaississement (5, 6, 7, 8, 9, 10, 11, 12) dépasse du côté extérieur de l'embout de tuyau (3), est supérieure au diamètre intérieur du collier (4), à l'état non fixé.

10. Agencement de batterie selon l'une des revendications précédentes,
**caractérisé en ce que**
l'emplacement d'épaississement (5, 6, 7, 8, 9, 10, 11, 12) s'étend complètement autour de la périphérie extérieure de l'embout de tuyau (3), présente un contour extérieur circulaire en vue de dessus sur la face frontale (14) de l'embout de tuyau (3), et présente un diamètre qui est supérieur au diamètre intérieur du collier (4), à l'état non fixé.

11. Agencement de batterie selon l'une des revendications précédentes,
**caractérisé en ce que**
la valeur de laquelle l'emplacement d'épaississement (5, 6, 7, 8, 9, 10, 11, 12) dépasse des côtés extérieurs de l'embout de tuyau (3) est dans la plage de 1 à 4 mm.
